# EUROPEAN PATENT APPLICATION

(11) **EP 2 704 005 A2**
(43) Date of publication of application: **05.03.2014**
(21) Application number: 13181493.1
(22) Date of filing: 23.08.2013
(51) Int. Cl.: G06F 9/44, G06F 9/54, G06F 9/445

(54) **Storage technology agnostic system for persisting instantiated software objects**

(30) Priority: 27.08.2012 US 201213595928
(71) Applicant: Synchronoss Technologies, Inc., Bridgewater, NJ 08807 (US)
(72) Inventor: Berry, David E, Basking Ridge, New Jersey 07920 (US); Bellomo, Michael, Somerville, New Jersey 08876 (US)
(74) Representative: Harris, Ian Richard

(57) **Abstract**

Embodiments of the present invention relate to a storage technology agnostic system for persisting software instantiated objects. The system provides an ability for software systems to use one persistence logic tool for disparate storage systems, such as MySQL databases and NoSQL databases, to store the software instantiated objects. These different storage systems can be utilized from within the same software system. The software instantiated objects from the software system are mapped to one or more storage systems via the persistence logic tool, which is configured as a single interface for all the storage systems.

## Description

### FIELD OF THE INVENTION

The present invention relates to storage technology. More particularly, the present invention relates to a storage technology agnostic system for persisting software instantiated objects.

### BACKGROUND OF THE INVENTION

Software code to store data from an application to a storage system is typically written around a specific technology. For example, storing Java objects from a software system in a relational database, such as a Sybase database, requires a specific technology like Java Database Connectivity (JDBC) or Hibernate. However, if data from the same software system are to be stored in another storage system, such as a Hadoop database, software code must also written around the technology specific to the Hadoop database. As such, to support numerous storage systems, a software code or interface for each storage system must be written to store data in the storage system from a software system. However, developing these different interfaces undesirably adds costs (e.g., development and training costs), time delay, and other technical issues.

### SUMMARY OF THE INVENTION

Embodiments of the present invention relate to a storage technology agnostic system for persisting software instantiated objects. The system provides an ability for software systems to use one persistence logic tool for disparate storage systems, such as MySQL databases and NoSQL databases, to store the software instantiated objects. These different storage systems can be utilized from within the same software system. The software instantiated objects from the software system are mapped to one or more storage systems via the persistence logic tool, which is configured as a single interface for all the storage systems.

In one aspect, an apparatus is provided. The apparatus includes a non-transitory memory for storing an application. The application is typically for configuring at least one mapping function. Each mapping function typically maps data of outputs to an associated destination. In some embodiments, the associated destination is a storage system. The storage system can be one of a plurality of storage systems communicatively coupled with the apparatus. The application is also typically for receiving at least one output from a source. In some embodiments, the source is a software system. The software system can be one of a plurality software systems communicatively coupled with the apparatus. The application is also typically for mapping the at least one output according to the configuration. In some embodiments, an output is a software instantiated object.

The apparatus also includes a processing component coupled to the memory. The processing component is configured for processing the application.

In another aspect, a persistence logic tool is provided. The persistence logic tool includes a first removable module relating to a first storage system, a second removable module relating to a second storage system, and an input for receiving a software instantiated object to be transformed using at least one of the first removable module and the second removable module. The first removable module typically uses transformation logic to describe a first function having the first storage system as a first output destination. Similarly, the second removable module uses transformation logic to describe a second function having the second storage system as a second output destination. In some embodiments, the first storage system is different from the second storage system.

In some embodiments, the persistence logic tool is configured to include other removable modules relating to other storage systems. In some embodiments, the persistence logic tool is configured as a single interface for all storage systems that the persistence logic tool is communicatively coupled with. In some embodiments, the persistence logic tool is configured to map the software instantiated object to one or more output destinations.

The software instantiated object is received from a software system. In some embodiments, the software system is one of a plurality software systems communicatively coupled with the persistence logic tool.

In yet another aspect, a method of persisting software instantiated objects is provided. The method includes configuring a persistence logic tool by a user. In some embodiments, configuring includes providing authentication information of a storage system, location information of a storage system, port information of a storage system, or a combination thereof.

The method also includes activating a software system, receiving at the persistence logic tool a software instantiated object from the software system, and mapping by the persistence logic tool the software instantiated object to one or more storage systems based on the configuration. In some embodiments, the software instantiated object has no knowledge of the one or more storage systems to which the software instantiated object is persisted.

In some embodiments, the persistence logic tool includes mapping functions utilized during the mapping.

In some embodiments, the one or more storage systems are disparate storage systems.

In yet another aspect, a storage technology agnostic system is provided. The storage technology agnostic system includes at least one storage system, a persistence logic tool configured as a single interface for the at least one storage system, and at least one software system communicatively coupled with the persistence logic tool. Each software system is configured to output one or more software instantiated objects that are mapped to one or more of the at least one storage system via the persistence logic tool based on user configuration of the persistence logic tool.

A storage system can be a relational database, a non-relational database, or a file system. In some embodiments, a storage system is a remote storage system.

### BRIEF DESCRIPTION OF THE DRAWINGS

Reference will now be made in detail to implementations of the present invention as illustrated in the accompanying drawings. The same reference indicators will be used throughout the drawings and the following detailed description to refer to the same or like parts.
Figure 1 illustrates an example mapping method in accordance with the present invention.
Figure 2 illustrates a block diagram of an example computing device configured to interface a plurality of storage systems in accordance with the present invention.
Figure 3 illustrates an example storage technology agnostic system in accordance with the present invention.
Figure 4 illustrates an example method of persisting software instantiated objects in accordance with the present invention.

### DETAILED DESCRIPTION OF THE INVENTION

In the following description, numerous details are set forth for purposes of explanation. However, one of ordinary skill in the art will realize that the invention may be practiced without the use of these specific details. Thus, the present invention is not intended to be limited to the embodiments shown but is to be accorded the widest scope consistent with the principles and features described herein.

Embodiments of the present invention relate to a storage technology agnostic system for persisting software instantiated objects. The system provides an ability for software systems to use one persistence logic tool for disparate storage systems, such as MySQL databases and NoSQL databases, to store the software instantiated objects. These different storage systems can be utilized from within the same software system. The software instantiated objects from the software system are mapped to one or more storage systems via the persistence logic tool, which is configured as a single interface for all the storage systems.

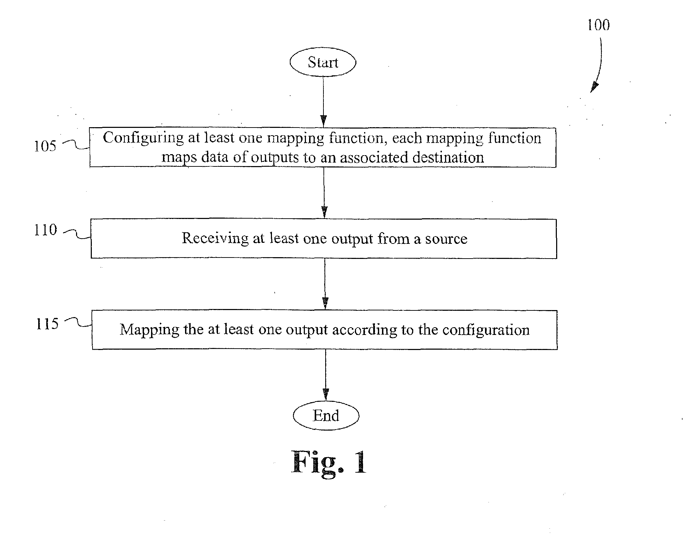

Figure 1 illustrates an example mapping method 100 in accordance with the present invention. The mapping method 100 is typically performed by the persistence logic tool. The method 100 begins at a step 105, where at least one mapping function is configured according to user preferences. Each mapping function typically maps data of outputs to an associated destination or target. In some embodiments, the associated destination is a storage system, which can be one of a plurality of storage systems that is communicatively coupled with the persistence logic tool.

At a step 110, the persistence logic tool receives at least one output from a source. An output can be a software instantiated object. In some embodiments, the source is a software system, which can be one of a plurality of software systems communicatively coupled with the persistence logic tool.

At a step 115, the persistence logic tool maps the at least one output according to the configuration from the step 105. The at least one output can be mapped to one or more destinations. After the step 115, the method 100 ends.

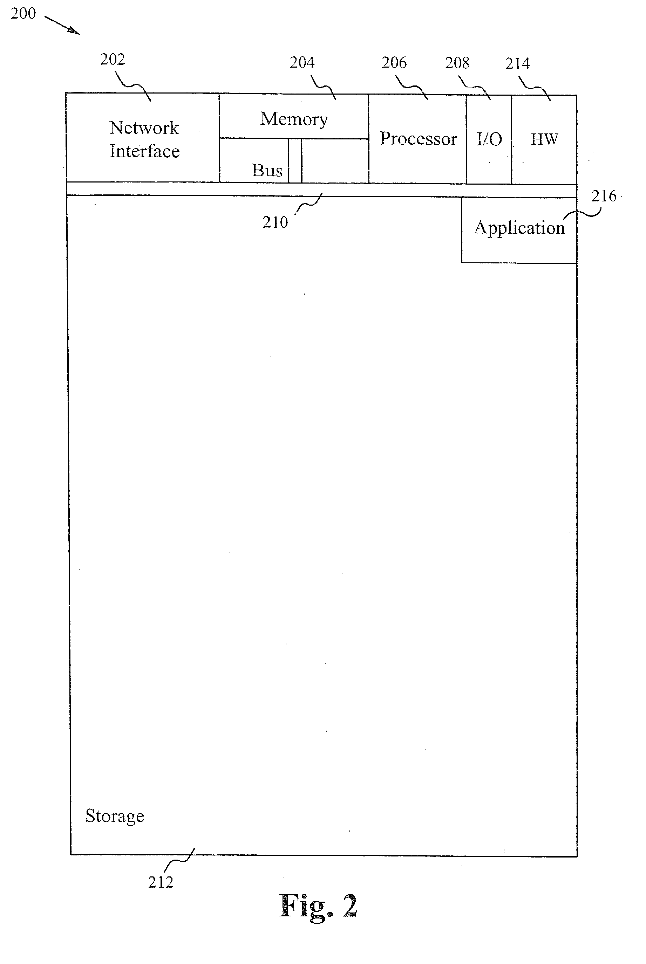

Figure 2 illustrates a block diagram of an example computing device 200 configured to implement the mapping method in accordance with the present invention. The computing device 200 is able to be used to acquire, store, compute, process, communicate and/or display information. For example, a computing device 200 is able to be used for mapping data to one or more storage systems. The mapping method is typically used after acquiring software instantiated objects.

In general, a hardware structure suitable for implementing the computing device 200 includes a network interface 202, a memory 204, a processor 206, I/O device(s) 208, a bus 210 and a storage device 212. The choice of processor is not critical as long as a suitable processor with sufficient speed is chosen. The memory 204 is able to be any conventional computer memory known in the art. The storage device 212 is able to include a hard drive, CDROM, CDRW, DVD, DVDRW, Blu-Ray®, flash memory card or any other storage device. The computing device 200 is able to include one or more network interfaces 202. An example of a network interface includes a network card connected to an Ethernet or other type of LAN. The I/O device(s) 208 are able to include one or more of the following: keyboard, mouse, monitor, display, printer, modem, touchscreen, button interface and other devices. In some embodiments, the hardware structure includes multiple processors and other hardware to perform parallel processing. Application(s) 216 used to perform the mapping method are likely to be stored in the storage device 212 and memory 204 and processed as applications are typically processed. More or fewer components shown in Figure 2 are able to be included in the computing device 200. In some embodiments, mapping hardware 214 is included. Although the computing device 200 in Figure 2 includes applications 216 and hardware 214 for implementing the mapping method, the mapping method is able to be implemented on a computing device in hardware, firmware, software or any combination thereof. For example, in some embodiments, the mapping applications 216 are programmed in a memory and executed using a processor. In another example, in some embodiments, the mapping hardware 214 is programmed hardware logic including gates specifically designed to implement the method.

In some embodiments, the mapping application(s) 216 include several applications and/or modules. In some embodiments, modules include one or more sub-modules as well. Each module relates to a storage system. If the persistence logic tool interfaces, for example, with five disparate storage systems, then the persistence logic tool includes five modules, each configured to map data to one of the five disparate storage systems.

Examples of suitable computing devices include a personal computer, a laptop computer, a computer workstation, a server, a mainframe computer, a handheld computer, a personal digital assistant, a cellular/mobile telephone (e.g. an iPhone®), a smart appliance, a tablet computer (e.g. an iPad®) or any other suitable computing device.

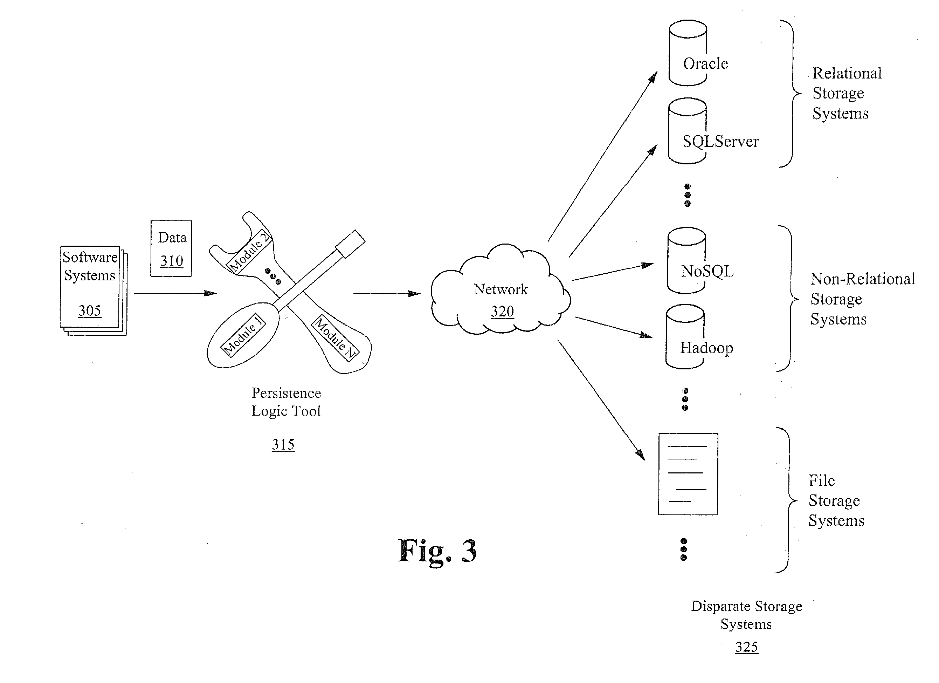

Figure 3 illustrates an example storage technology agnostic system 300 in accordance with the present invention. The system 300 includes at least one software system 305, a persistence logic tool 315, and at least one storage system 335. Each software system 305 is communicatively coupled with the persistence logic tool 315 and is configured to output one or more software instantiated objects 310 that are to be mapped to one or more of the at least one storage system 335 via the persistence logic tool 315. The persistence logic tool 315 is typically configured as a single interface for all the storage systems 335.

The storage systems 335 are disparate storage systems. Example storage systems include relational databases, such as Oracle databases, SQL Server databases, Sybase databases, MySQL and databases. Other example storage systems include non-relational databases, such as NoSQL databases, Hadoop databases, and Cassandra databases. Yet other example storage systems include file systems. In some embodiments, one or more storage systems 335 are remote storage systems. The remote storage systems can be coupled to the persistence logic tool 315 via a network 320.

In some embodiments, the persistence logic tool 315 includes a first removable module relating to a first storage system 325 and a second removable module relating to a second storage system 325. The first removable module typically uses transformation logic to describe a first function having the first storage system as a first output destination. Similarly, the second removable module uses transformation logic to describe a second function having the second storage system as a second output destination. The first storage system is typically different from the second storage system. The persistence logic tool 315 is able to include other removable modules relating to other storage systems 325. The persistence logic tool 315 is typically configured as a single interface for all storage systems that the persistence logic tool is communicatively coupled with.

Transformation logic is a logic system where transformations are defined as functions. In the present invention, these functions describe the mapping of a software object into one or more disparate storage systems.

The persistence logic tool 315 also includes an input for receiving a software instantiated object to be transformed using at least one of the removable modules. The software instantiated object is received from a software system 305. In some embodiments, the software system is one of a plurality software systems communicatively coupled with the persistence logic tool 315. The persistence logic tool 315 is configured to map the software instantiated object to one or more output destinations.

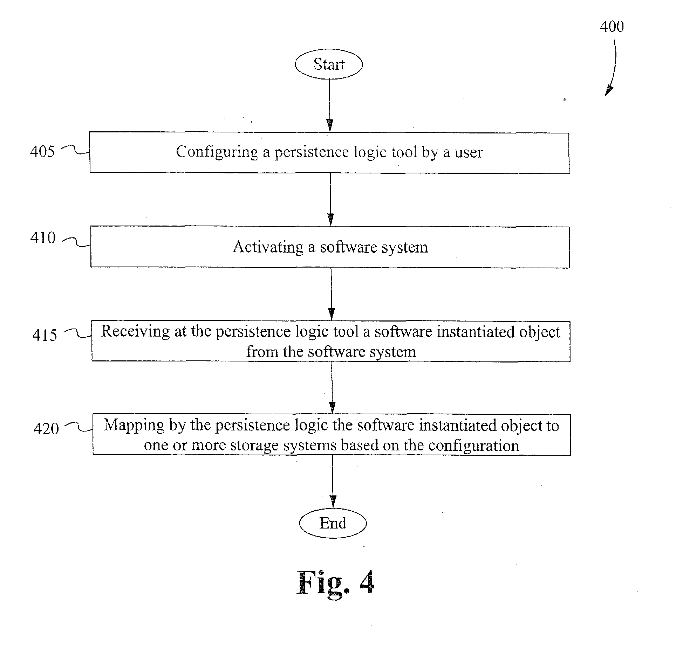

Figure 4 illustrates an example method 400 of persisting software instantiated objects in accordance with the present invention. The method 400 begins at a step 405, where the persistence logic tool is configured by a user. As discussed above, the persistence logic tool defines mapping functions which map data from software instantiated objects to one or more disparate storage systems. The user typically indicates which of the storage systems are to be used (e.g., to store the software instantiated objects in).

In some embodiments, the persistence logic tool is configured by providing authentication information of a storage system. Alternatively or in addition to, the persistence logic tool is configured by providing location information of a storage system. Alternatively or in addition to, the persistence logic tool is configured by providing port information of a storage system.

Once the user describes this information, the interface is written in such a way that the persistence logic tool automatically configures a software instantiated object to "fit" into the appropriate destination(s).

At a step 410, a software system is activated. Typically, code associated with the software system is executed. The software system is configured to produce a software instantiated object.

At a step 415, the persistence logic tool receives the software instantiated object from the software system. In some embodiments, the software instantiated object has no knowledge of any storage system to which the software instantiated object is persisted.

At a step 420, the persistence logic tool maps the software instantiated object to the one or more disparate storage systems as specified by the user at the step 405. The persistence logic tool typically includes mapping functions utilized during the step 405. In some embodiments, the steps 415-420 are repeated until all the software instantiated objects from the software system are mapped. After the step 420, the method 400 ends.

A persistence logic tool of the present invention supports multiple different storage systems or persistent layers without creating separate interfaces from which a software system outputs software instantiated objects to and without needing to change the software system. As new storage system technologies are introduced and integrated with the storage technology agnostic system, users (e.g., developers) are able to advantageously use the same persistence logic tool without modifying the software system. The present invention makes it easier to introduce new storage system technologies when the interface to the different storage systems does not change.

Aspects of the subject matter described herein are set out in the following numbered clauses.
1. An apparatus comprising:
   a. a non-transitory memory for storing an application, the application for:
      1. configuring at least one mapping function, each mapping function maps data of outputs to an associated destination;
      2. receiving at least one output from a source; and
      3. mapping the at least one output according to the configuration; and
   b. a processing component coupled to the memory, the processing component configured for processing the application.
2. The apparatus of clause 1, wherein the associated destination is a storage system.
3. The apparatus of clause 2, wherein the storage system is one of a plurality of storage systems communicatively coupled with the apparatus.
4. The apparatus of any one of clauses 1 to 3, wherein the source is a software system.
5. The apparatus of clause 4, wherein the software system is one of a plurality software systems communicatively coupled with the apparatus.
6. The apparatus of any one of clauses 1-5, wherein an output is a software instantiated object.
7. A persistence logic tool comprising:
   a. a first removable module relating to a first storage system, wherein the first removable module uses transformation logic to describe a first function having the first storage system as a first output destination;
   b. a second removable module relating to a second storage system, wherein the second removable module uses predicate logic to describe a second function having the second storage system as a second output destination; and
   c. an input for receiving a software instantiated object to be transformed using at least one of the first removable module and the second removable module.
8. The persistence logic tool of clause 7, wherein the first storage system is different from the second storage system.
9. The persistence logic tool of clause 7 or clause 8, wherein the persistence logic tool is configured to include other removable modules relating to other storage systems.
10. The persistence logic tool of any one of clauses 7 to 9, wherein the persistence logic tool is configured as a single interface for all storage systems that the persistence logic tool is communicatively coupled with.
11. The persistence logic tool of any one of clauses 7 to 10, wherein the persistence logic tool is configured to map the software instantiated object to one or more output destinations.
12. The persistence logic tool of any one of clauses 7 to 11, wherein the software instantiated object is received from a software system.
13. The persistence logic tool of clause 12, wherein the software system is one of a plurality software systems communicatively coupled with the persistence logic tool.
14. A method of persisting software instantiated objects, the method comprising:
   a. configuring a persistence logic tool by a user;
   b. activating a software system;
   c. receiving at the persistence logic tool a software instantiated object from the software system; and
   d. mapping by the persistence logic tool the software instantiated object to one or more storage systems based on the configuration.
15. The method of clause 14, wherein the persistence logic tool includes mapping functions utilized during the mapping.
16. The method of clause 14 or clause 15, wherein the software instantiated object has no knowledge of the one or more storage systems to which the software instantiated object is persisted.
17. The method of any one of clauses 14 to 16, wherein the one or more storage systems are disparate storage systems.
18. The method of any one of clauses 14 to 17, wherein configuring includes providing authentication information of a storage system.
19. The method of any one of clause 14 to 18, wherein configuring includes providing location information of a storage system.
20. The method of any one of clauses 14 to 19, wherein configuring includes providing port information of a storage system.
21. A storage technology agnostic system comprising:
   a. at least one storage system;
   b. a persistence logic tool configured as a single interface for the at least one storage system; and
   c. at least one software system communicatively coupled with the persistence logic tool, each configured to output one or more software instantiated objects that are mapped to one or more of the at least one storage system via the persistence logic tool based on user configuration of the persistence logic tool.
22. The storage technology agnostic system of clause 21, wherein the at least one storage system includes a relational database.
23. The storage technology agnostic system of clause 21 or clause 22, wherein the at least one storage system includes a non-relational database.
24. The storage technology agnostic system of any one of clauses 21 to 23, wherein the at least one storage system includes a file system.
25. The storage technology agnostic system of any one of clause 21 to 24, wherein the at least one storage system is a remote storage system.

While the invention has been described with reference to numerous specific details, one of ordinary skill in the art will recognize that the invention can be embodied in other specific forms without departing from the spirit of the invention. Thus, one of ordinary skill in the art will understand that the invention is not to be limited by the foregoing illustrative details, but rather is to be defined by the appended claims.

## Claims

1. A persistence logic tool comprising:
a. a first removable module relating to a first storage system, wherein the first removable module uses transformation logic to describe a first function having the first storage system as a first output destination;
b. a second removable module relating to a second storage system, wherein the second removable module uses transformation logic to describe a second function having the second storage system as a second output destination; and
c. an input for receiving a software instantiated object to be transformed using at least one of the first removable module and the second removable module.

2. The persistence logic tool of Claim 1, wherein the first storage system is different from the second storage system.

3. The persistence logic tool of Claim 1 or Claim 2, wherein the persistence logic tool is configured to include other removable modules relating to other storage systems.

4. The persistence logic tool of any one of the preceding Claims, wherein the persistence logic tool is configured as a single interface for all storage systems that the persistence logic tool is communicatively coupled with.

5. The persistence logic tool of any one of the preceding Claims, wherein the persistence logic tool is configured to map the software instantiated object to one or more output destinations.

6. The persistence logic tool of any one of the preceding Claims, wherein the software instantiated object is received from a software system.

7. The persistence logic tool of Claim 6, wherein the software system is one of a plurality software systems communicatively coupled with the persistence logic tool.

8. A method of persisting software instantiated objects, the method comprising:
a. configuring a persistence logic tool by a user;
b. activating a software system;
c. receiving at the persistence logic tool a software instantiated object from the software system; and
d. mapping by the persistence logic tool the software instantiated object to one or more storage systems based on the configuration.

9. The method of Claim 8, wherein the persistence logic tool includes mapping functions utilized during the mapping.

10. The method of Claim 8 or Claim 9, wherein the software instantiated object has no knowledge of the one or more storage systems to which the software instantiated object is persisted.

11. The method of any one of Claims 8 to 10, wherein the one or more storage systems are disparate storage systems.

12. The method of any one of Claims 8 to 11, wherein configuring includes providing authentication information of a storage system.

13. The method of any one of Claims 8 to 12, wherein configuring includes providing location information of a storage system.

14. A storage technology agnostic system comprising:
a. at least one storage system;
b. a persistence logic tool configured as a single interface for the at least one storage system; and
c. at least one software system communicatively coupled with the persistence logic tool, each configured to output one or more software instantiated objects that are mapped to one or more of the at least one storage system via the persistence logic tool based on user configuration of the persistence logic tool.

15. The storage technology agnostic system of Claim 14, wherein the at least one storage system includes at least one of a relational database, a non-relational database, a file system and a remote storage system.
